# EUROPÄISCHE PATENTSCHRIFT

(11) **EP 2 800 198 B1**
(45) Veröffentlichungstag und Bekanntmachung des Hinweises auf die Patenterteilung: **24.08.2016**
(21) Anmeldenummer: 14156522.6
(22) Anmeldetag: 25.02.2014
(51) Int. Cl.: H01M 10/6551

(54) **Batteriemodul mit mindestens zwei nebeneinander angeordneten Batteriezellen, Verfahren zur Herstellung eines Batteriemoduls und Kraftfahrzeug**
Battery module with at least two battery cells arranged side by side, method for producing a battery module and motor vehicle
Module de batterie comprenant au moins deux cellules de batterie adjacentes, procédé de fabrication d'un module de batterie et véhicule automobile

(30) Priorität: 12.04.2013 DE 102013206504
(43) Veröffentlichungstag der Anmeldung: 05.11.2014
(73) Patentinhaber: ROBERT BOSCH GMBH, 70442 Stuttgart (DE); Samsung SDI Co., Ltd., Yongin-si Gyeonggi-do 446-577 (KR)
(72) Erfinder: Kohlberger, Markus, 70174 Stuttgart (DE)
(74) Vertreter: Bee, Joachim

(56) Entgegenhaltungen:
- WO-A1-2012/117681
- DE-A1-102011 077 295
- DE-A1-102011 103 993
- US-A1- 2005 026 014
- US-A1- 2007 037 053
- US-A1- 2011 212 356

## Beschreibung

Die vorliegende Erfindung betrifft ein Batteriemodul mit mindestens zwei nebeneinander angeordneten Batteriezellen, beispielsweise Lithium-Ionen-Zellen, ein Verfahren zur Herstellung eines Batteriemoduls und ein Kraftfahrzeug mit einem Batteriemodul.

### Stand der Technik

Durch verbesserte Speicherkapazität, häufigere Wiederaufladbarkeit und höhere Energiedichten finden Batterien, beispielsweise Lithium-Ionen-Zellen basierte Batterien oder Nickelmetallhydrid-Batterien, immer breitere Anwendungen. Lithium-Ionen-Zellen basierte Batterien zeichnen sich unter anderem aus durch hohe Energiedichten und eine äußerst geringe Selbstentladung.

Batterien mit geringerer Energiespeicherkapazität werden zum Beispiel für kleine tragbare elektronische Geräte wie Mobiltelefone, Laptops, Camcordern und dergleichen verwendet, während Batterien mit hoher Kapazität als Energiequelle für den Antrieb von Motoren von Hybrid- oder Elektro-Fahrzeugen etc. oder als stationäre Batterien Verwendung finden.

Batterien können zum Beispiel durch das serielle Verschalten von Batteriemodulen gebildet werden, wobei teilweise auch parallele Verschaltungen der Batteriemodule erfolgen und die Batteriemodule ihrerseits aus seriell und/oder parallel verschalteten Batteriezellen, die jeweils ein Elektrodenensemble in einem Gehäuse aufweisen, bestehen können.

Damit die Interkalation beziehungsweise Deinterkalation von Lithium-Ionen stattfindet, ist die Anwesenheit einer auch als Lithium-Leitsalz bezeichneten Elektrolytkomponente, beispielsweise Lithium-Hexafluorophosphat (LIPF₆), notwendig. LIPF₆ ist gegenüber Feuchtigkeit hoch reaktiv. Es erfolgt eine mehrstufige Hydrolyse bis hin zu Fluorwasserstoff (HF). Batteriezellgehäuse weisen daher beispielsweise eine Metallfolie oder ein Metallblech als Sperre gegen das Eindringen von Luftfeuchtigkeit in die Batteriezelle auf. Beispielsweise bestehen sogenannte Hardcase-Gehäuse aus einem in prismatischer oder zylindrischer Form tiefgezogenen Aluminiumblech.

Batteriezellen haben einen Betriebstemperaturbereich, in dem sie optimal oder nur mit geringen Leistungsabstrichen arbeiten. Außerhalb dieses Betriebstemperaturbereichs ist die Leistungsfähigkeit der Batteriezellen deutlich geringer. Daher ist es möglich, ein Batteriemodul mittels Adapterplatten mit einem Temperierelement zu verbinden. Die Batteriezellen entwickeln im Betrieb selbst Wärme. Daher kann das Temperierelement zumindest Kühlen ausgebildet sein. Das Temperierelement kann beispielsweise eine Kühlplatte sein, die von einem Kühlmittel, beispielsweise einem Glykol/Wasser-Gemisch, durchströmt wird. Weil aber auch besonders niedrige Umgebungstemperatur zum Verlassen des Betriebstemperaturbereichs führen kann, kann das Temperierelement auch geeignet sein, die Batteriezellen des Batteriemoduls auf eine Mindesttemperatur im Betriebstemperaturbereich zu erwärmen.

Die Koreanische Patentanmeldung 10 2008 0016044 befasst sich mit der Ertüchtigung eines Batteriemoduls mit prismatischen Einheitszellen zur effizienten Emission der von den Einheitszellen erzeugten Wärme. Zwischen den Einheitszellen befindet sich eine Barriere zur Separierung der Einheitszellen, wobei zwischen der Einheitszelle und der Barriere ein thermisch leitfähiges Polster aus Silizium platziert ist.

### Offenbarung der Erfindung

Erfindungsgemäß werden ein Batteriemodul nach Anspruch 1 mit mindestens zwei nebeneinander angeordneten Batteriezellen, ein Verfahren nach Anspruch 6 zur Herstellung eines Batteriemoduls und ein Kraftfahrzeug nach Anspruch 10 mit einem Batteriemodul zur Verfügung gestellt.

Das Batteriemodul ist dadurch gekennzeichnet, dass ein Boden mindestens einer der Batteriezellen eine wärmeleitfähige Ausgleichsbeschichtung aufweist, die einen Versatz zwischen den Batteriezellen ausgleicht und die Batteriezellen zwischen Adapterplatten angeordnet sind, an denen ein Temperierelement befestigt ist.

Das erfindungsgemäße Batteriemodul ist für einen thermisch besser leitfähigen Kontakt zu einem Temperierelement geeignet.

In einer Ausführungsform umfasst die Ausgleichsbeschichtung ein ausgehärtetes Elastomer, das mit wärmeleitfähigem Material gefüllt ist. Diese Art der Ausgleichsbeschichtung lässt sich leicht aufbringen.

Das Elastomer kann Silikon, Polyurethan oder Polyesterpolyurethan umfassen. Dies sind preisgünstige, leicht verfügbare Elastomere.

Die Ausgleichsbeschichtung kann Epoxidharz oder Acrylat umfassen. Dies sind andere preisgünstige, leicht verfügbare Ausgleichsbeschichtungsmaterialien.

Das wärmeleitfähige Material kann ein keramisches Material sein. Keramisches Material hat einen besonders guten Wärmeleitkoeffizienten.

Das erfindungsgemäß vorgestellte Verfahren umfasst die Schritte a) Anordnen der Batteriezellen nebeneinander und b) Ausgleichen von Versatz zwischen den Böden der nebeneinander angeordneten Batteriezellen.

In einer Ausführungsform des Verfahrens werden die Batteriezellen mit nach oben weisenden Böden nebeneinander angeordnet. Dann umfasst das Verfahren das Anbringen von Adapterplatten zur Befestigung eines Kühlelements an den Endseiten des Batteriemoduls. Und Schritt b) umfasst dann: Umschließen der Böden der Batteriezellen mit einem Rahmen, Auftragen eines Beschichtungsmaterials, Glattstreichen des Beschichtungsmaterials mit einem auf den Adapterplatten aufliegenden Rakel, Aushärten des Beschichtungsmaterials und Entfernen des Rahmens.

In einer anderen Ausführungsform des Verfahrens werden die Batteriezellen nebeneinander in einer Form angeordnet, wobei die Form die Böden der Batteriezellen umschließt und mindestens eine Öffnung aufweist, über die ein Hohlraum zwischen der Form und den Böden zugänglich ist. Dann umfasst Schritt b: Einfüllen eines Beschichtungsmaterials durch die Öffnung in den Hohlraum, Aushärten des Beschichtungsmaterials und Entfernen der Form.

Das Beschichtungsmaterial kann unter Druck durch die Einfüllöffnung eingespritzt werden.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 beispielhaft einen Versatz zwischen Böden von Batteriezellen eines Batteriemoduls in Seitenansicht,
Figur 2 beispielhaft eine Ansicht auf die Böden der Batteriezellen des Batteriemoduls während eines Schritts des erfindungsgemäßen Verfahrens und
Figur 3 beispielhaft eine Seitenansicht der Böden der Batteriezellen des Batteriemoduls in einer Form mit einer Öffnung.

### Ausführungsformen der Erfindung

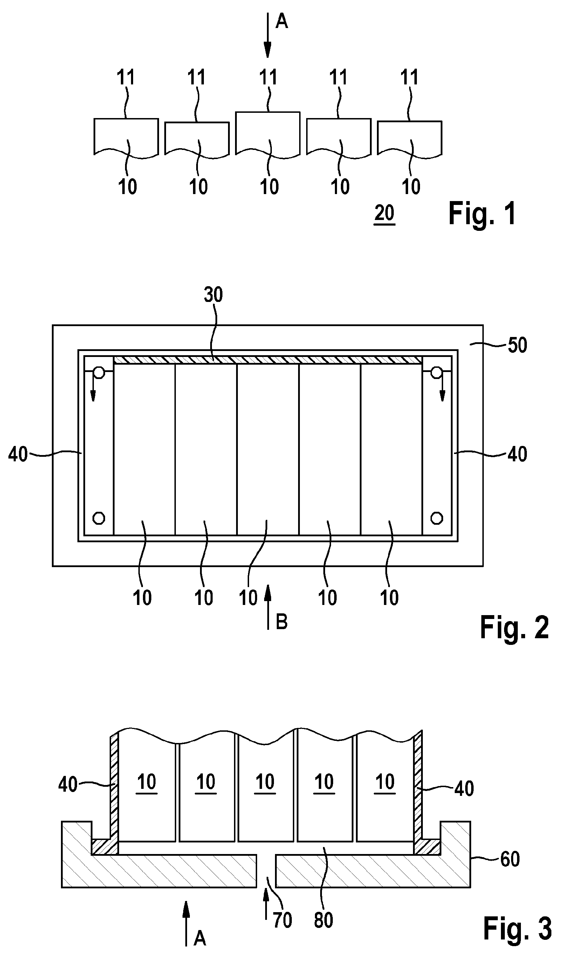

Figur 1 zeigt beispielhaft einen Versatz zwischen den Böden 11 von Batteriezellen 10 eines auf dem Kopf stehenden Batteriemoduls 20 in Seitenansicht. Die Böden 11 der Batteriezellen 10 zeigen also nach oben. Wegen des Versatzes bilden die Böden 11 keine plane Fläche. Dabei kann der Versatz von Fertigungstoleranzen der Batteriezellen, Montagetoleranzen oder anderen Ursachen herrühren.

Der Versatz bewirkt einen nicht optimalen Wärmeübertrag zwischen dem Batteriemodul und einem Temperierelement. Nur der höchste Boden kann in direkten flächigen Kontakt mit dem Temperierelement kommen.

Eine Möglichkeit, wärmeleitfähigen Kontakt zwischen den Böden 11 der Batteriezellen 10 und dem Temperierelement herzustellen, besteht im Einlegen einer wärmeleitfähigen Folie zwischen Batterieböden und Temperierelement.

Alternativ oder zusätzlich kann eine wärmeleitfähige Beschichtung auf einigen oder allen Böden 11 der Batteriezellen 10 aufgebracht sein, die den Versatz ausgleicht. Insbesondere können mit Ausnahme des Bodens 11 einer höchsten Batteriezelle 10 alle verbleibenden Böden 11 der Batteriezellen 10 die Ausgleichsbeschichtung aufweisen.

In einer beispielhaften Ausführungsform des erfindungsgemäßen Verfahrens zur Herstellung eines Batteriemoduls werden Batteriezellen wie in Figur 1 dargestellt nebeneinander angeordnet. Figur 1 zeigt die Batteriezellen des Batteriemoduls in einer Seitenansicht entlang einer in Figur 2 gezeigten Blickrichtung B, Figur 2 zeigt die Böden der Batteriezellen des Batteriemoduls in einer Aufsicht aus einer in Figur 1 gezeigten Blickrichtung A.

Nach Anordnung der Batteriezellen 10 des Batteriemoduls 20 nebeneinander werden zur Verbindung des Batteriemoduls mit einem Temperierelement Adapterplatten 40 an dem Batteriemodul 20 angebracht. Das Batteriemodul 20 wird umgedreht, sodass die Böden der Batteriezellen 10 des Batteriemoduls 20 nach oben weisen. Dann wird ein Rahmen 50 um die Böden angeordnet, der die Böden 11 umschließt. Dabei steht der Rahmen 50 mindestens so weit über die Böden 11 über wie die Adapterplatten. Der Rahmen umschließt die Böden der Batteriezellen 10 formschlüssig, sodass er mit einer fließfähigen Masse gefüllt werden kann, ohne dass die fließfähige Masse zwischen dem Rahmen und den Batteriezellen 10 austritt.

In der beispielhaften Ausführungsform des erfindungsgemäßen Verfahrens wird der Rahmen mit einer Elastomermasse, beispielsweise einer Silikonelastomermasse, einer Polyurethanelastomermasse oder einer Polyesterurethanelastomermasse, gefüllt. Bei der Silikonelastomermasse kann es sich zum Beispiel um einen Zweikomponenten-Silikonkautschuk (RTV-2 Silikonkautschuk) handeln, welcher Polydimethylsiloxane, Kieselsäureestern und Zinnkatalysatoren aufweist. Durch Umsetzung der Polydimethylsiloxane mit den Kieselsäureestern an den Zinnkatalysatoren härtet die Silikonelastomermasse aus.

Die Elastomermasse kann mit wärmeleitfähigem Material aufgefüllt und homogenisiert sein. Beispielsweise kann ein keramisches Füllmaterial in die Elastomermasse zur Verbesserung der Wärmeleitfähigkeit eincompoundiert sein.

Eine Rakel 30 wird auf die Adapterplatten 40 aufgelegt und die Masse mittels der Rakel 30 glatt gestrichen. So entsteht eine plane, mit den Adapterplatten 40 abschließende Fläche. Nach Aushärten der Masse und Entfernen des Rahmens kann dann das Temperierelement mit den Adapterplatten 40 so befestigt, zum Beispiel verschraubt, werden, dass das Temperierelement mit den durch die Beschichtung ausgeglichenen Böden der Batteriezellen 10 in wärmeleitfähigem flächigem Kontakt steht.

Der Versatz der Böden 11 kann auch erst ausgeglichen werden, ehe die Adapterplatten 40 an das Batteriemodul 20 mit ausgeglichenen Böden befestigt werden. Dazu wird der Rahmen 50 so montiert, dass er mindestens die Höhe des Bodens 11 einer höchsten Batteriezelle 10 erreicht. Die Rakel 30 wird auf den Boden 11 der höchsten Batteriezelle 10 aufgelegt und die Masse mittels der Rakel 30 glatt gestrichen. So entsteht eine plane, mit dem Boden 11 der höchsten Batteriezelle 10 abschließende Fläche. Nach Aushärten der Masse und Entfernen des Rahmens kann dann das Temperierelement mit den Adapterplatten 40 so am Batteriemodul befestigt, zum Beispiel verschraubt, werden, dass das Temperierelement mit den durch die Beschichtung ausgeglichenen Böden der Batteriezellen 10 in wärmeleitfähigem flächigem Kontakt steht. Der Boden des Batteriemoduls ist also in seiner Ebenheit verbessert und daher besser thermisch an das Temperierelement anbindbar. Dabei bleibt das Batteriemodul als Ganzes leicht austauschbar.

Anstatt das Batteriemodul umzudrehen, kann das Batteriemodul 20 mit nebeneinander angeordneten Batteriezellen 10 in eine Form 60 eingesetzt werden. Die Form 60 weist mindestens eine Öffnung 70 auf. Über die Öffnung 70 ist ein Hohlraum 80 zugänglich. Der Hohlraum 80 wird durch die Form 60 und die Böden 11 der Batteriezellen 10 gebildet. Sofern die Adapterplatten 40 vor Einsetzen in die Form 60 am Batteriemodul 20 befestigt wurden, bestimmt eine Höhe, mit der die Adapterplatten 40 über die Böden 11 hinausragen, eine maximale Höhe des Hohlraumes 80 mit. Sonst bestimmt allein ein Maximalversatz zwischen dem Boden 11 der höchsten Batteriezelle 10 und dem Boden 11 einer niedrigsten Batteriezelle 10 die maximale Höhe des Hohlraums. Über die Öffnung 70 wird dann wärmeleitfähiges Material in den Hohlraum 80 eingebracht, zum Beispiel eingespritzt, und dieser weitestgehend vollständig gefüllt.

Anstelle der Elastomermasse oder in Ergänzung der Elastomermasse können ein Epoxidharz und/oder ein unter ultraviolettem Licht aushärtendes Acrylat für die Beschichtung der Böden 11 der Batteriezellen 10 des Batteriemoduls 20 verwendet werden.

Die Ausgleichsbeschichtung kann Unebenheiten in den Böden 11 der Batteriezellen 10 und/oder Unebenheit im Boden des Batteriemoduls 20, also Versatz zwischen den Böden 11 der Batteriezellen 10 so ausgleichen, dass eine Oberfläche entsteht, die formschlüssig mit einer entsprechenden Oberfläche eines Temperierelements in wärmeleitfähigen Kontakt gebracht werden kann.

## Patentansprüche

1. Batteriemodul (20) mit mindestens zwei nebeneinander angeordneten Batteriezellen (10), wobei ein Boden (11) mindestens einer der Batteriezellen (10) eine wärmeleitfähige Ausgleichsbeschichtung aufweist, die einen Versatz zwischen den Batteriezellen (10) ausgleicht, wobei die mindestens zwei nebeneinander angeordneten Batteriezellen (10) zwischen zwei Adapterplatten (40) angeordnet sind,
**dadurch gekennzeichnet, dass**
ein Temperierelement an den Adapterplatten (40) derart befestigt ist, dass das Temperierelement mit den durch die Ausgleichsbeschichtung ausgeglichenen Böden (11) der Batteriezellen (10) in wärmeleitfähigem, flächigem Kontakt steht.

2. Batteriemodul nach Anspruch 1, wobei die Ausgleichsbeschichtung ein ausgehärtetes Elastomer umfasst, das mit wärmeleitfähigem Material gefüllt ist.

3. Batteriemodul nach Anspruch 2, wobei das Elastomer Silikon, Polyurethan oder Polyesterpolyurethan umfasst.

4. Batteriemodul nach Anspruch 1, wobei die Ausgleichsbeschichtung Epoxidharz oder Acrylat umfasst.

5. Batteriemodul nach einem der Ansprüche 2 bis 4, wobei das wärmeleitfähige Material ein keramisches Material ist.

6. Verfahren zur Herstellung eines Batteriemoduls (20) nach einem der vorangehenden Ansprüche, mit den Schritten:
a. Anordnen der Batteriezellen (10) nebeneinander zwischen zwei Adapterplatten (40), welche zur Befestigung eines Temperierelement eingerichtet sind, und
b. Ausgleichen von Versatz zwischen Böden (11) der nebeneinander angeordneten Batteriezellen (10).

7. Verfahren nach Anspruch 6, wobei die Batteriezellen (10) mit nach oben weisenden Böden (11) nebeneinander angeordnet werden und Schritt b umfasst: Umschließen der Böden (11) der Batteriezellen (10) mit einem Rahmen (50), Auftragen eines Beschichtungsmaterials, Glattstreichen des Beschichtungsmaterials mit einer auf den Adapterplatten (40) aufliegenden Rakel (30), Aushärten des Beschichtungsmaterials und Entfernen des Rahmens (50).

8. Verfahren nach Anspruch 6, wobei die Batteriezellen (10) nebeneinander in einer Form (60) angeordnet werden, wobei die Form die Böden (11) der Batteriezellen (10) umschließt und mindestens eine Öffnung (70) aufweist, über die ein Hohlraum (80) zwischen der Form (60) und den Böden (11) zugänglich ist, und Schritt b umfasst: Einfüllen eines Beschichtungsmaterials durch die Öffnung (70) in den Hohlraum (80), Aushärten des Beschichtungsmaterials und Entfernen der Form (60).

9. Verfahren nach Anspruch 6, wobei das Beschichtungsmaterial unter Druck durch die Öffnung (70) eingespritzt wird.

10. Kraftfahrzeug mit einem Batteriemodul (20) nach einem der Ansprüche 1 bis 5.

## Claims

1. Battery module (20) comprising at least two battery cells (10) which are arranged next to one another, wherein a base (11) of at least one of the battery cells (10) has a thermally conductive compensating coating which compensates for an offset between the battery cells (10), wherein the at least two battery cells (10) which are arranged next to one another are arranged between two adapter plates (40), **characterized in that**
a temperature-control element is fastened to the adapter plates (40) in such a way that the temperature-control element is in thermally conductive, surface-area contact with the bases (11) of the battery cells (10) which are compensated for by the compensating coating.

2. Battery module according to Claim 1, wherein the compensating coating comprises a cured elastomer which is filled with thermally conductive material.

3. Battery module according to Claim 2, wherein the elastomer comprises silicone, polyurethane or polyester polyurethane.

4. Battery module according to Claim 1, wherein the compensating coating comprises epoxy resin or acrylate.

5. Battery module according to one of Claims 2 to 4, wherein the thermally conductive material is a ceramic material.

6. Method for producing a battery module (20) according to one of the preceding claims, comprising the steps of:
a. arranging the battery cells (10) next to one another between two adapter plates (40) which are designed to fasten a temperature-control element, and
b. compensating for an offset between bases (11) of the battery cells (10) which are arranged next to one another.

7. Method according to Claim 6, wherein the battery cells (10) with upwardly pointing bases (11) are arranged next to one another, and step b comprises: surrounding the bases (11) of the battery cells (10) with a frame (50), applying a coating material, smoothing the coating material with a doctor blade (30) which rests on the adapter plates (40), curing the coating material, and removing the frame (50).

8. Method according to Claim 6, wherein the battery cells (10) are arranged next to one another in a mould (60), wherein the mould surrounds the bases (11) of the battery cells (10) and has at least one opening (70) by means of which a hollow space (80) between the mould (60) and the bases (11) is accessible, and step b comprises: filling the hollow space (80) with a coating material through the opening (70), curing the coating material, and removing the mould (60).

9. Method according to Claim 6, wherein the coating material is injected through the opening (70) under pressure.

10. Motor vehicle comprising a battery module (20) according to one of Claims 1 to 5.

## Revendications

1. Module de batterie (20) comprenant au moins deux cellules de batterie (10) adjacentes, dans lequel un fond (11) d'au moins une des cellules de batterie (10) présente un revêtement de compensation conducteur qui compense un décalage entre les cellules de batterie (10), dans lequel les au moins deux cellules de batterie (10) adjacentes sont disposées entre deux plaques adaptatrices (40),
**caractérisé en ce**
**qu'**un élément de mise en température est ainsi fixé sur les plaques adaptatrices (40), que l'élément de mise en température est en contact plan et conducteur avec les fonds (11) des cellules de batterie (10) compensés par le revêtement de compensation.

2. Module de batterie selon la revendication 1, dans lequel le revêtement de compensation comprend un élastomère durci qui est rempli d'un matériau conducteur.

3. Module de batterie selon la revendication 2, dans lequel l'élastomère comprend de la silicone, du polyuréthane ou polyester-polyuréthane.

4. Module de batterie selon la revendication 1, dans lequel le revêtement de compensation est une résine époxy ou de l'acrylate.

5. Module de batterie selon l'une des revendications 2 à 4, dans lequel le matériau conducteur est un matériau céramique.

6. Procédé de fabrication d'un module de batterie (20) selon l'une des revendications précédentes, comprenant les étapes suivantes :
a. agencement des cellules de batterie (10) de façon adjacente entre deux plaques adaptatrices (40) qui sont installées pour fixer un élément de mise en température, et
b. compensation du décalage entre les fonds (11) de cellules de batteries (10) adjacentes.

7. Procédé selon la revendication 6, dans lequel les cellules de batteries (10) sont disposées adjacentes avec les fonds (11) orientés vers le haut et l'étape b comprend : l'enveloppement des fonds (11) des cellules de batteries (10) par un cadre (50), l'application d'un matériau de revêtement, le lissage du matériau de revêtement avec une racle (30) reposant sur les plaques adaptatrices (40), le durcissement du matériau de revêtement et l'enlèvement du cadre (50).

8. Procédé selon la revendication 6, dans lequel les cellules de batteries (10) sont disposées adjacentes dans un moule (60), dans lequel le moule enveloppe les fonds (11) des cellules de batterie (10) et présente au moins une ouverture (70) par laquelle une cavité (80) entre le moule (60) et les fonds (11) est accessible, et l'étape b comprend : le remplissage d'un matériau de revêtement à travers l'ouverture (70) dans la cavité (80), le durcissement du matériau de revêtement et l'enlèvement du moule (60).

9. Procédé selon la revendication 6, dans lequel le matériau de revêtement est injecté sous pression à travers l'ouverture (70).

10. Véhicule automobile comprenant un module de batterie (20) selon l'une des revendications 1 à 5.
